# EUROPÄISCHE PATENTSCHRIFT

(11) **EP 2 087 318 B1**
(45) Veröffentlichungstag und Bekanntmachung des Hinweises auf die Patenterteilung: **11.06.2014**
(21) Anmeldenummer: 07821330.3
(22) Anmeldetag: 15.10.2007
(51) Int. Cl.: G01D 3/08, G08C 19/02

(54) **VORRICHTUNG ZUR BESTIMMUNG UND/ODER ÜBERWACHUNG MINDESTENS EINER PROZESSGRÖSSE**
SYSTEM FOR DETERMINING AND/OR MONITORING AT LEAST ONE PROCESS QUANTITY
DISPOSITIF POUR LA DÉTERMINATION ET/OU LA SURVEILLANCE D'AU MOINS UNE GRANDEUR DE PROCESSUS

(30) Priorität: 31.10.2006 DE 102006051900
(43) Veröffentlichungstag der Anmeldung: 12.08.2009
(73) Patentinhaber: Endress + Hauser GmbH + Co. KG, 79689 Maulburg (DE)
(72) Erfinder: WERNET, Armin, 79618 Rheinfelden (DE); WIEDMANN, Dirk, 79618 Rheinfelden (DE)
(74) Vertreter: Andres, Angelika Maria
(86) Internationale Anmeldenummer: PCT/EP2007/060963
(87) Internationale Veröffentlichungsnummer: WO 2008/052877

(56) Entgegenhaltungen:
- EP-A- 0 707 215
- EP-A- 0 809 222
- EP-A- 0 927 982

## Beschreibung

Die Erfindung bezieht sich auf eine Vorrichtung zur Bestimmung und/oder Überwachung mindestens einer Prozessgröße, mit mindestens einer ersten Elektronikeinheit und mindestens einer zweiten Elektronikeinheit. Bei der Prozessgröße handelt es sich beispielsweise um den Füllstand, die Dichte, die Viskosität, den Druck, den Durchfluss oder den pH-Wert eines Mediums, bei welchem es sich vorzugsweise um eine Flüssigkeit oder um ein Schüttgut handelt.

In der Prozess- und Automatisierungstechnik werden häufig Messgeräte zur Bestimmung und/oder Überwachung von Prozessgrößen verwendet. Befindet sich das Medium oder der zu überwachende Prozess in einem explosionsgefährdeten Bereich, so ist oft eine galvanische Trennung erforderlich, um den mediumsberührenden Teil des Messgerätes in einem explosionsgefährdeten Bereich, bei welchem es sich meist um den durch das Messgerät zumindest mit zu überwachenden Prozess handelt, beispielsweise vom Teil der Energieversorgung oder der Bedienung durch ein Bedienpersonal zu trennen. Dafür weisen die Messgeräte meist zwei Elektronikeinheiten auf, zwischen denen eine solche galvanische Trennung besteht. Über diese Trennung hinweg wird üblicherweise die notwendige Energie für das Betreiben der Sensoreinheit übermittelt und auch Daten, z.B. Messdaten, wobei diese ggf. sogar in beide Richtungen transferiert werden. Im Stand der Technik ist hierfür bereits eine Reihe von Möglichkeiten bekannt, siehe z.B. DE 2 321 900, EP 0 977 406 A1 oder EP 0 927 982 B1. Diese Ausgestaltungen sind jedoch sehr aufwendig und kostenintensiv. Eine weitere Möglichkeit besteht darin, die erforderliche Energie über einen Transformator als Übertrager zu übertragen und die Daten über Optokoppler, wobei auf jeder Seite der galvanischen Trennung eine entsprechend Einheit verwendet wird, um bidirektionale Datenübertragung zu ermöglichen. Eine solche "sichere Trennung" ist sehr platzaufwendig und durch die erhöhten Bauteilanforderungen auch teuer.

EP 0 707 215 A2 beschreibt einen Multimeter mit Überlastauslöser. Eine Spannungsversorgung versorgt eine Elektronik, wobei die Spannungsversorgung von der Elektronik galvanisch getrennt ist. Die Energieübertragung zwischen der Spannungsversorgung und der Elektronik findet induktiv mittels Kernhälften aus Ferrit statt, die sich gegenüber stehen und jeweils Wicklungen aufweisen.

EP 0 809 222 A1 beschreibt eine Anordnung zur Datenübertragung zwischen einem Feldgerät und einem Bediengerät, wobei das Feldgerät und das Bediengerät galvanisch getrennt sind. Das Feldgerät ist über Koppelmittel mit einem Steuergerät verbunden, wobei das Koppelmittel zur Wechselstromübertragung einen Übertrager mit Kemmaterial und Wicklungen aufweist.

EP 0 927 982 A1 beschreibt einen Messumformer-Speisegerät zur Versorgung eines Messumformers mit elektrischer Energie, wobei der Messumformer in einer explosionsgefährdeter Zone liegt. Die elektrische Energie wird über eine Zweidrahtverbindung übertragen, die einen Übertrager als galvanische Trennung aufweist.

Die Aufgabe der Erfindung besteht somit in der Bereitstellung einer galvanischen Trennung, welche sowohl die Übertragung von elektrischer Energie, als auch von Daten ermöglicht, wobei insbesondere die hohen Platzanforderungen und die hohen Kosten des Standes der Technik vermieden werden.

Die Erfindung löst die Aufgabe dadurch, dass mindestens eine Übertragungseinheit vorgesehen ist, dass die Übertragungseinheit zwischen der ersten Elektronikeinheit und der zweiten Elektronikeinheit angeordnet ist, und dass die Übertragungseinheit derartig ausgestaltet ist, dass die Übertragungseinheit elektrische Energie und Daten zwischen der ersten Elektronikeinheit und der zweiten Elektronikeinheit überträgt. Die Übertragungseinheit ist derartig ausgestaltet, dass die Übertragungseinheit Daten von der ersten Elektronikeinheit zur zweiten Elektronikeinheit durch eine Steuerung der Frequenz der Übertragung der elektrischen Energie überträgt. Erfindungsgemäß ist die Übertragungseinheit derartig ausgestaltet, dass die Übertragungseinheit zur Übertragung einer logischen Null von der ersten Elektronikeinheit zur zweiten Elektronikeinheit die Übertragung der elektrischen Energie über eine vorgebbare Zeitdauer unterbricht und/oder auf einen vorgebbaren Wert setzt.

Dies ist somit eine spezielle Frequenz, bei welcher eine logische Null als Unterbrechung der Energieübertragung oder als Herabsetzung der Energie auf einen bestimmten, geringeren Wert übertragen wird. Diese Taktung kann somit auch verwendet werden, um digitale Einsen und Nullen zu übertragen oder um beispielsweise eine Art Morsen mit entsprechend langen Pausen oder Taktzeiten zwischen den Pausen zu verwenden.

Von der Primär- zur Sekundärseite findet also die Datenübertragung durch die Taktung der Energieübertragung statt. Die Daten, die so von der ersten Elektronikeinheit zur zweiten Elektronikeinheit übertragen werden, beziehen sich dabei beispielsweise auf Messparameter oder Überwachungsfunktionen, welche die zweite Elektronikeinheit für die Messung oder die Verarbeitung der Messdaten benötigt, oder es handelt sich um eine Rückkopplung, bei welcher eine Versicherung dahingehend stattfindet, dass die erste Elektronikeinheit die Daten der zweiten Elektronikeinheit richtig empfangen hat. Die Datenrichtung ist also jeweils in Richtung auf eine Sensoreinheit. Eine Möglichkeit der Übertragung ist, dass unterschiedliche Frequenzen für unterschiedliche Schaltzustände vereinbart sind, d.h. eine hohe Frequenz entspricht dem Erreichen eines vorgegebenen Füllstands, eine niedrige Frequenz dem Unterschreiten, wobei es sich in diesem Beispiel bei der Prozessgröße entsprechend um den Füllstand handelt.

Eine Ausgestaltung sieht vor, dass die Übertragungseinheit derartig ausgestaltet ist, dass die Übertragungseinheit Daten von der ersten Elektronikeinheit zur zweiten Elektronikeinheit überträgt, indem die Übertragungseinheit die elektrische Energie in Form einer elektrischen Wechselspannung überträgt und die Frequenz der Wechselspannung entsprechend der Daten moduliert. Hier handelt es sich ganz speziell um die Übertragung einer Wechselspannung, deren Frequenz selbst die zu übermittelnde Information trägt. Beispielsweise werden unterschiedlichen Frequenzen unterschiedliche Informationen zugeordnet oder die Frequenz selbst ist die Information, wenn beispielsweise die Prozessgröße eine Frequenzänderung hervorruft.

Eine Ausgestaltung beinhaltet, dass die Übertragungseinheit derartig ausgestaltet ist, dass die Übertragungseinheit Daten von der zweiten Elektronikeinheit zur ersten Elektronikeinheit überträgt, indem die Übertragungseinheit den Strom, welcher die zweite Elektronikeinheit von der ersten Elektronikeinheit abgreift, entsprechend den Daten moduliert. In dieser

Ausgestaltung wird die Informationsübertragung von der Sekundärauf die Primärseite beschrieben. Diese Übermittlung wird derartig vorgenommen, dass auf der Sekundärseite in Abhängigkeit von der zu übertragenden Information der Strombedarf moduliert wird, d.h. die Primärseite bekommt mit, dass auf der Sekundärseite jeweils ein anderer Strombedarf besteht. Entsprechend einem vereinbarten Protokoll wird somit Information auf die Primärseite übertragen.

Die Übertragungseinheit ist derartig ausgestaltet, dass die Übertragungseinheit als galvanische Trennung zwischen der ersten Elektronikeinheit und der zweiten Elektronikeinheit dient.

Eine Ausgestaltung sieht vor, dass mindestens eine Sensoreinheit vorgesehen ist, welche elektrisch mit der zweiten Elektronikeinheit verbunden ist. Die zweite Elektronikeinheit ist somit im Messgerät ein Bestandteil der eigentlichen Sensorkomponente, welche für die Durchführung der Messung und der Erzeugung eines Messsignals zuständig ist. Die erste Elektronikeinheit stellt dahingegen die Schnittstelle zum Anwender her, in Bezug auf Energie, Datenschnittstellen oder auch Vorort-Bedienung.

Eine Ausgestaltung beinhaltet, dass die Übertragungseinheit mindestens einen Transformator aufweist.

Eine Ausgestaltung sieht vor, dass in der zweiten Elektronikeinheit mindestens ein Pufferkondensator zur Speicherung von elektrischer Energie vorgesehen ist. Dieser Pufferkondensator ist insbesondere dann vorteilhaft, wenn die Energieübertragung von der Primärseite für die Übertragung einer logischen Null unterbrochen wird.

Eine Ausgestaltung beinhaltet, dass die Übertragungseinheit derartig ausgestaltet ist, dass die Übertragungseinheit vor einer Übertragung von Daten eine Synchronisation vornimmt. Vorzugsweise wird eine Synchronisation vorgenommen, wenn Daten von der zweiten Elektronikeinheit als Sender zur ersten Elektronikeinheit als Empfänger übertragen werden, da dies über die Modulation des Stroms erfolgt. Die Synchronisation wird also derartig ausgeführt, dass insbesondere die Empfangsseite "empfangsbereit" geschaltet wird. Vorzugsweise wird die Synchronisation, also die Abstimmung zwischen Sender und Empfänger vor jeder Datenübertragung vorgenommen, vorzugsweise jedoch nur von der Übertragung von der zweiten zur ersten Elektronikeinheit. Insbesondere befindet sich in jeder Elektronikeinheit ein Prozessor zur Steuerung der Datenübertragung.

Die Erfindung wird anhand der nachfolgenden Zeichnungen näher erläutert. Es zeigt:
Fig. 1: eine schematische Darstellung des erfindungsgemäßen Messgerätes, und
Fig. 2: eine detaillierte Darstellung des Messgerätes der Fig. 1.

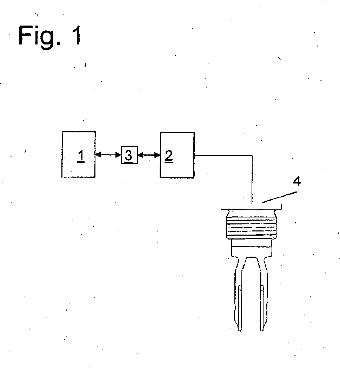

In der Fig. 1 ist ein erfindungsgemäßes Messgerät prinzipiell dargestellt, wobei es sich hier bei der Sensoreinheit 4 beispielhaft um eine sog. Schwinggabel handelt. In anderen Ausgestaltungen handelt es sich bei der Sensoreinheit 4 beispielsweise um eine kapazitive Sonde oder um eine pH-Elektrode oder um eine Antenne für Mikrowellen oder um eine Druckmesszelle oder um eine Temperatursonde oder um ein Durchflussmessgerät. Die Erfindung der Übertragung von Energie und Information bezieht sich nicht auf den Messtyp, sondern ist von diesem unabhängig.

Das Messgerät besteht aus einer ersten Elektronikeinheit 1 und einer zweiten Elektronikeinheit 2. Die zweite Elektronikeinheit 2, welche auch als "Brontend" bezeichnet wird, ist mit der Sensoreinheit 4 verbunden und beaufschlagt diese beispielsweise mit einem Messsignal. In dem hier gezeigten Beispiel versorgt die zweite Elektronikeinheit 2 die Schwinggabel 4 mit einer Wechselspannung, welche von der Gabel 4 in mechanische Schwingungen übertragen wird. Weiterhin empfängt die zweite Elektronikeinheit 2 die Signale der Sensoreinheit 4. In diesem Fall handelt es sich wiederum um eine Wechselspannung, welche abhängt von solchen Größen wie Füllstand; Dichte oder Viskosität des Mediums, mit welchem die Schwinggabel 4 in Kontakt kommt. Allgemeiner formuliert: die zweite Elektronikeinheit 2 ist in Richtung des zu messenden bzw. zu überwachenden Prozesses bzw. des Mediums angeordnet und übernimmt zumindest einen Teil der Kernaufgaben der Messung wie das Erzeugen eines Abfragesignals und das Empfangen, Weiterverarbeiten und/oder Auswerten eines Messsignals von der Sensoreinheit 4.

In der ersten Elektronikeinheit 1 wird vorzugsweise die Energieversorgung realisiert, aber auch die Ein-/Ausgabe von Meßdaten, Schaltzustand oder Meßparametern.

In vielen Anwendungen ist es erforderlich, dass eine galvanische Trennung bzw. "sichere" galvanische Trennung zwischen den beiden Elektronikeinheiten 1, 2 gegeben ist. Dieses kann aus funktionalen oder sicherheitstechnischen Gründen erforderlich sein. Als Trennung wird gelegentlich ein Transformator verwendet, über welchen beispielsweise die elektrische Energie / Leistung übertragen wird. Gleichzeitig ist es ggf. auch erforderlich, dass Information / Daten zwischen den beiden Einheiten 1, 2 übertragen werden, wobei diese Informationsübertragung die galvanische Trennung nicht aufheben darf. Für diesen Zweck werden beispielsweise Optokoppler verwendet. Ist es überdies erforderlich, dass nicht nur die Messdaten von der zweiten Elektronikeinheit 2 zur ersten Elektronikeinheit 1 übertragen werden, sondern dass auch Messparameter oder Überwachungsfunktionen an die zweite Elektronikeinheit 2 übermittelt werden oder dass eine Bestätigung der Messdaten durch eine Rückübertragung erfolgt, so sind in beiden Elektronikeinheiten 1, 2 Optokoppler erforderlich, welche zum einen Kosten verursachen und zum anderen viel Platz benötigen. Die zu übertragenden Daten können sowohl aus binären Signalen, aber auch aus einem seriellen Protokoll bestehen.

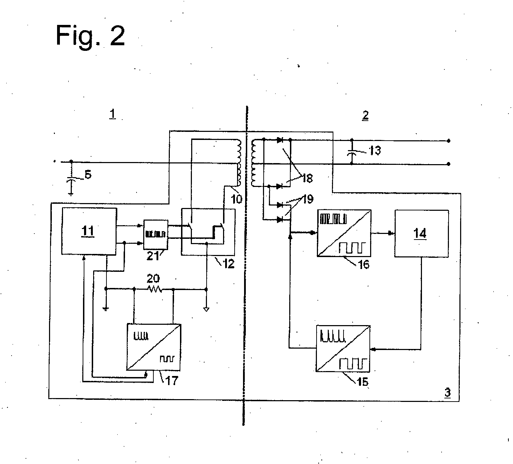

Im Stand der Technik werden also beispielsweise ein Transformator für die Energieübertragung und zwei Optokoppler für die Datenübertragung verwendet. Diesen Kostenanforderungen bzw. hohen Platzforderungen entgeht das erfindungsgemäße Messgerät, indem es über eine Übertragungseinheit 3 eine Energie- und Datenübertragung vornimmt, wobei die Datenübertragung sogar bidirektional möglich ist. Die Übertragungseinheit 3 ist in einer Ausgestaltung von beiden Elektronikeinheiten 1, 2 abgesetzt (Fig. 1) und ist in einer zweiten Ausgestaltung (Fig. 2) teilweise Bestandteil der beiden Elektronikeinheiten 1, 2. In der Fig. 2 ist quasi die Ansteuerung zur Übertragung der Daten jeweils ein Bestandteil der Elektronikeinheit, welche Daten übertragen möchte, und beiden Elektronikeinheiten gemein ist der Transformator als eigentlicher Übertrager.

In der Erfindung wird dabei die Übertragung der Energie durch die Übertragung der Daten bzw. Information überlagert, so dass quasi die Energie die Information trägt. Ein praktisches Beispiel wird in der Fig. 2 gezeigt.

In der Fig. 2 wird beispielhaft die elektrische Energie durch einen Transformator 10 als galvanische Trennung von der ersten. Elektronikeinheit 1 zur zweiten Elektronikeinheit 2 übertragen.

Um ebenfalls Information von der ersten Elektronikeinheit 1 zur zweiten Elektronikeinheit 2 zu senden, wird die Leistungsübertragung durch den Transformator 10 getaktet. Hierfür ist ein erster Prozessor 11 vorgesehen, welcher entsprechend der zu übermittelnden Information und einem mit der zweiten Elektronikeinheit 2 vereinbarten Protokoll die Leistungsübertragung über einen Schalter 12 steuert. Eine logische Null lässt sich beispielsweise dadurch übertragen, dass kurzzeitig keine elektrische Energie übertragen wird. Damit in diesem Fall dennoch die zweite Elektronikeinheit 2 arbeiten kann, wird zum einen der Zeitraum möglichstkurz gehalten und ist zum anderen in der zweiten Elektronikeinheit 2 ein Pufferkondensator 13 vorgesehen. Es wird also von der ersten Elektronikeinheit 1 zur zweiten Elektronikeinheit 2 Information durch eine Modulation der zu übertragenden elektrischen Energie übertragen. Dabei wird vorzugsweise die Stärke der Energie moduliert, beispielsweise zwischenzeitig auf Null gesetzt. In einer weiteren Ausgestaltung wird eine elektrische Wechselspannung verwendet, deren Frequenz entsprechend der zu übertragenden Daten variiert wird.

Auf Seiten der zweiten Elektronikeinheit 2 wird Information zur ersten Elektronikeinheit 1 übertragen, indem der Strombedarf geändert wird, d.h. es wird unterschiedlich viel Strom "gezogen". Hierfür ist ein zweiter Prozessor 14 in der zweiten Elektronikeinheit 2 bzw. im Anteil der zweiten Elektronikeinheit 2 an der Übertragungseinheit 3 vorgesehen. Dieser zweite Prozessor 14 gibt ein Signal an einen Strommodulator 15, welcher kurzzeitig mit Nadelimpulsen den Strombedarf der Sekundärseite des Transformators 10 erhöht. Je nach der Taktung des Strombedarfs wird somit Information auf die Primärseite, d.h. in die erste Elektronikeinheit 1 übertragen. Der erhöhte Strombedarf wird dabei auch nur kurzzeitig erzeugt, um eine Überlastung bzw. Verluste zu vermeiden. In einer weiteren Ausgestaltung wird der Strombedarf kurzzeitig auf ein entsprechendes Niveau abgesenkt. Dargestellt ist weiterhin, dass die Modulation der über den Transformator 10 übertragenen Energie über einen Demodulator 16 den zweiten Prozessor 14 erreicht.

Eine in Hinsicht auf die Technik detaillierte Beschreibung der Fig. 2 ist wie folgt:
Die Einheit 11, z.B. ein Prozessor, erzeugt ein Rechtecksignal für die Ansteuerung eines DC/DC Wandlers, bei welchem es sich in einer weiteren Ausgestaltung um eine eigenständige astabile Kippstufe handelt. Auf der Sekundärseite 2 wird das Signal über die Gleichrichtdioden 18 gleichgerichtet und im Pufferkondensator 13 geglättet und gespeichert. Der Pufferkondensator 5 auf der Primärseite 1 liefert die für die DC/DC-Wandlung erforderlichen Impulsströme und hält die Eingangsspannung nahezu konstant. Zudem wird in der Einheit 11 eine zu übertragende Information bzw. Protokoll generiert und über den Modulator 21 auf die Übertragungseinheit 10 aufmoduliert. Die interne Logik verriegelt dabei bei Übertragung einer logischen Null beide Schalttransistoren. Dabei muss sichergestellt werden, dass bei sehr vielen logischen Nullen bzw. nach Ende eines Kommunikation-Zyklus die Verriegelung zur Auffrischung der Ladung im Pufferkondensator 13 in der zweiten Elektronikeinheit 2 aufgehoben wird. Die Gleichrichteinheit 19 leitet das modulierte Signal auf einen Demodulator 16, der die gesendeten Daten für die Empfangseinheit im Prozessor 14 aufbereitet. Bei der Übertragung von der zweiten Elektronikeinheit 2 zur ersten Elektronikeinheit 1 werden in Abhängigkeit von der zu übertragenden Information kurze Stromimpulse durch den Modulator 15 aufmoduliert. Die Modulation erfolgt an den Kathoden der Gleichrichtdioden 19. Die Gleichrichtdioden 18 auf der Sekundärseite des Übertragers 10 wirken während der Strommodulation als Entkoppeldioden und garantieren, dass der modulierte Strom über den Übertrager 10 fließt und nicht aus dem Pufferkondensator 13 entnommen werden kann. In dieser Ausführung entspricht jeder Zustandwechsel von "Low" nach "High" bzw. von "High" nach "Low" einem Stromimpuls. Auf der Primärseite des Übertragers 10 kann diese Strominformation am Strom-/Spannungswandler 20 ausgekoppelt werden und im Demodulator 17, der im Wesentlichen aus einem D-Flip-Flop besteht, für die weitere Verarbeitung in der Prozessoreinheit 11 aufbereitet werden.

Durch EMV-Einwirkungen (z.B Burst- oder Surgeimpulse) kann es zu Störungen in der Kommunikation kommen, indem z.B. ein Stromimpuls zuviel oder zuwenig erfasst wird. Um sicherzustellen, dass das Signal durch Störungen nicht dauerhaft invertiert oder verfälscht werden kann, wird vor jedem Informationsaustausch von der zweiten Elektronikeinheit 2 zur ersten Elektronikeinheit 1 eine Synchronisierung des D-Flip-Flops im Demodulator 17 vorgenommen. Dieses Signal kann direkt aus der Sendeleitung, die auf den Modulator 21 wirkt, entnommen werden und auf den Preset des Flip-Flops geleitet werden.

In der Praxis wird parallel zum Strom-Spannungswandler 20 ein Kondensator geschaltet, der Störungen durch kurze Transienten herausfiltert.

Die erfindungsgemäße Übertragung von Energie und Daten erfolgt also, indem von der einen zur anderen Seite die übertragene Energie zeitlich moduliert wird (d.h. Frequenzmodulation der von der ersten Elektronikeinheit 1 gesendeten Energie) und indem umgekehrt der Stromabfall zeitlich verändert wird (d.h. zeitliche Veränderung des von der zweiten Elektronikeinheit 2 gezogenen Stroms).

### Bezugszeichenliste

**Tabelle 1**

| | |
|---|---|
| 1 | Erste Elektronikeinheit |
| 2 | Zweite Elektronikeinheit |
| 3 | Übertragungseinheit |
| 4 | Sensoreinheit |
| 5 | Pufferkondensator |
| 10 | Transformator |
| 11 | Erster Prozessor |
| 12 | Elektronischer Schalter |
| 13 | Pufferkondensator |
| 14 | Zweiter Prozessor |
| 15 | Strommodulator |
| 16 | Demodulator |
| 17 | Demodulator |
| 18 | Gleichricht - und Entkoppeldioden |
| 19 | Gleichrichtdiode |
| 20 | Strom-/Spannungswandler |
| 21 | Modulator |

## Patentansprüche

1. Vorrichtung zur Bestimmung und/oder Überwachung mindestens einer Prozessgröße,
mit mindestens einer ersten Elektronikeinheit (1) und mindestens einer zweiten Elektronikeinheit (2),
wobei mindestens eine Übertragungseinheit (3) vorgesehen ist,
wobei die Übertragungseinheit (3) zwischen der ersten Elektronikeinheit (1) und der zweiten Elektronikeinheit (2) angeordnet ist und als galvanische Trennung zwischen der ersten Elektronikeinheit (1) und der zweiten Elektronikeinheit (2) dient, wobei die Übertragungseinheit (3) derartig ausgestaltet ist, dass die Übertragungseinheit (3) elektrische Energie und Daten zwischen der ersten Elektronikeinheit (1) und der zweiten Elektronikeinheit (2) überträgt, und wobei die Übertragungseinheit (3) derartig ausgestaltet ist, dass die Übertragungseinheit (3) Daten von der ersten Elektronikeinheit (1) zur zweiten Elektronikeinheit (2) durch eine Steuerung der Frequenz der Übertragung der elektrischen Energie überträgt,
**dadurch gekennzeichnet,**
**dass** die Übertragungseinheit (3) derartig ausgestaltet ist, dass die Übertragungseinheit (3) zur Übertragung einer logischen Null von der ersten Elektronikeinheit (1) zur zweiten Elektronikeinheit (2) die Übertragung der elektrischen Energie über eine vorgebbare Zeitdauer unterbricht und/oder auf einen vorgebbaren Wert setzt.

2. Vorrichtung nach Anspruch 1,
**dadurch gekennzeichnet,**
**dass** die Übertragungseinheit (3) derartig ausgestaltet ist, dass die Übertragungseinheit (3) Daten von der ersten Elektronikeinheit (1) zur zweiten Elektronikeinheit (2) überträgt, indem die Übertragungseinheit (3) die elektrische Energie in Form einer elektrischen Wechselspannung überträgt und die Frequenz der Wechselspannung entsprechend der Daten moduliert.

3. Vorrichtung nach Anspruch 1 oder 2,
**dadurch gekennzeichnet,**
**dass** die Übertragungseinheit (3) derartig ausgestaltet ist, dass die Übertragungseinheit (3) Daten von der zweiten Elektronikeinheit (2) zur ersten Elektronikeinheit (1) überträgt, indem die Übertragungseinheit (3) den Strom, welcher die zweite Elektronikeinheit (2) von der ersten Elektronikeinheit (1) abgreift, entsprechend den Daten moduliert.

4. Vorrichtung nach mindestens einem der Ansprüche 1 bis 3,
**dadurch gekennzeichnet,**
**dass** mindestens eine Sensoreinheit (4) vorgesehen ist, welche elektrisch mit der zweiten Elektronikeinheit (2) verbunden ist.

5. Vorrichtung nach mindestens einem der Ansprüche 1 bis 4,
**dadurch gekennzeichnet,**
**dass** die Übertragungseinheit (3) mindestens einen Transformator (10) aufweist.

6. Vorrichtung nach mindestens einem der Ansprüche 1 bis 5,
**dadurch gekennzeichnet,**
**dass** in der zweiten Elektronikeinheit (2) mindestens ein Pufferkondensator (13) zur Speicherung von elektrischer Energie vorgesehen ist.

7. Vorrichtung nach mindestens einem der Ansprüche 1 bis 6,
**dadurch gekennzeichnet,**
**dass** die Übertragungseinheit (3) derartig ausgestaltet ist, dass die Übertragungseinheit (3) vor einer Übertragung von Daten eine Synchronisation vornimmt.

## Claims

1. Device for determining and/monitoring at least one process variable,
with at least a first electronics unit (1) and at least a second electronics unit (2),
wherein at least one transmission unit (3) is provided,
wherein the transmission unit (3) is arranged between the first electronics unit (1) and the second electronics unit (2), and serves as the galvanic isolation between the first electronics unit (1) and the second electronics unit (2),
wherein the transmission unit (3) is designed in such a way that the transmission unit (3) transmits electrical energy and data between the first electronics unit (1) and the second electronics unit (2), and
wherein the transmission unit (3) is designed in such a way that the transmission unit (3) transmits data from the first electronics unit (1) to the second electronics unit (2) by controlling the frequency of transmission of the electrical energy,
**characterized in that**
the transmission unit (3) is designed in such a way that the transmission unit (3) interrupts the transmission of electrical energy over a pre-determinable time and/or sets it to a pre-determinable value in order to transmit a logical zero from the first electronics unit (1) to the second electronics unit (2).

2. Device as claimed in Claim 1,
**characterized in that**
the transmission unit (3) is designed in such a way that the transmission unit (3) transmits data from the first electronics unit (1) to the second electronics unit (2) **in that** the transmission unit (3) transmits the electrical energy in the form of an electrical alternating voltage and modulates the frequency of the alternating voltage in accordance with the data.

3. Device as claimed in Claim 1 or 2,
**characterized in that**
the transmission unit (3) is designed in such a way that the transmission unit (3) transmits data from the second electronics unit (2) to the first electronics unit (1) **in that** the transmission unit (3) modulates the current, which the second electronics unit (2) picks up from the first electronics unit (1), in accordance with the data.

4. Device as claimed in at least one of the Claims 1 to 3,
**characterized in that**
at least one sensor unit (4) is provided which is electrically connected to the second electronics unit (2).

5. Device as claimed in at least one of the Claims 1 to 4,
**characterized in that**
the transmission unit (3) has at least one transformer (10).

6. Device as claimed in at least one of the Claims 1 to 5,
**characterized in that**
at least one buffer capacitor (13) designed for saving electrical energy is provided in the second electronics unit (2).

7. Device as claimed in at least one of the Claims 1 to 6,
**characterized in that**
the transmission unit (3) is designed in such a way that the transmission unit (3) performs synchronization before transmitting the data.

## Revendications

1. Dispositif destiné à la détermination et/ou la surveillance d'au moins une grandeur process,
avec au moins une première unité électronique (1) et au moins une deuxième unité électronique (2),
pour lequel est prévue au moins une unité de transmission (3),
pour lequel l'unité de transmission (3) est disposée entre la première unité électronique (1) et la deuxième unité électronique (2), et sert de séparation galvanique entre la première unité électronique (1) et la deuxième unité électronique (2),
pour lequel l'unité de transmission (3) est conçue de telle manière que l'unité de transmission (3) transmet l'énergie électrique et les données entre la première unité électronique (1) et la deuxième unité électronique (2), et
pour lequel l'unité de transmission (3) est conçue de telle manière que l'unité de transmission (3) transmet les données de la première unité électronique (1) vers la deuxième unité électronique (2) par une commande de la fréquence de transmission de l'énergie électrique,
**caractérisé en ce**
**que** l'unité de transmission (3) est conçue de telle manière que l'unité de transmission (3) interrompt pendant une durée prédéfinie la transmission de l'énergie électrique en vue de la transmission d'un zéro logique de la première unité électronique (1) vers la deuxième unité électronique (2), et/ou la définit à une valeur prédéfinissable.

2. Dispositif selon la revendication 1,
**caractérisé en ce**
**que** l'unité de transmission (3) est conçue de telle manière que l'unité de transmission (3) transmet les données de la première unité électronique (1) vers la deuxième unité électronique (2) en ce que l'unité de transmission (3) transmet l'énergie électrique sous la forme d'une tension alternative électrique et module la fréquence de la tension alternative en fonction des données.

3. Dispositif selon la revendication 1 ou 2,
**caractérisé en ce**
**que** l'unité de transmission (3) est conçue de telle manière que l'unité de transmission (3) transmet les données de la deuxième unité électronique (2) vers la première unité électronique (1) en ce que l'unité de transmission (3) module le courant, que la deuxième unité électronique (2) prélève de la première unité électronique (1), en fonction des données.

4. Dispositif selon l'une des revendications 1 à 3,
**caractérisé en ce**
**qu'**est prévue au moins une unité de capteur (4), laquelle est reliée électriquement avec la deuxième unité électronique (2).

5. Dispositif selon l'une des revendications 1 à 4,
**caractérisé en ce**
**que** l'unité de transmission (3) comporte au moins un transformateur (10).

6. Dispositif selon l'une des revendications 1 à 5,
**caractérisé en ce**
**qu'**est prévue, dans la deuxième unité électronique (2), au moins un condensateur tampon (13) destiné au stockage de l'énergie électrique.

7. Dispositif selon l'une des revendications 1 à 6,
**caractérisé en ce**
**que** l'unité de transmission (3) est conçue de telle manière que l'unité de transmission (3) procède à une synchronisation avant la transmission de données.
